## Europäisches Patentamt
## European Patent Office
## Office européen des brevets

(11) Veröffentlichungsnummer: **0 019 810**
**A1**

(12) **EUROPÄISCHE PATENTANMELDUNG**

(21) Anmeldenummer: 80102719.4

(22) Anmeldetag: 16.05.80

(51) Int. Cl.³: **A 22 C 7/00**

(30) Priorität: 18.05.79 DE 2920048

(43) Veröffentlichungstag der Anmeldung: **10.12.80**
Patentblatt 80/25

(84) Benannte Vertragsstaaten: BE CH FR GB LI NL

(71) Anmelder: **Kölmel, Paul, Kronenstrasse 7, D-7556 Ötigheim (DE)**

(72) Erfinder: **Kölmel, Paul, Kronenstrasse 7, D-7556 Ötigheim (DE)**

(74) Vertreter: **Jung, Herman L., Dipl.-Chem., Ludwis Wilhelmstrasse 20, Ludwig Wilhelmstrasse 20 (DE)**

(54) **Schinkenpresse.**

(57) Bei dieser Schinkenpresse sind Fleischstücke zwischen mehreren Formeinsätzen (7, 5, 6) in beliebiger Anordnung und Anzahl, für runde (7) und kantige (5, 6) Formschinken zur Erzielung von gleichmässigen, den Fleischqualitäten entsprechenden Stückgrössen in einem an beiden Enden offenen Zylinder (1) übereinander eingesetzt und werden darin mittels hohem hydr. Kolbendrucks zusammengepresst und gekocht und ausgekühlt, bzw. werden zur Rohschinkenherstellung geformt, gepresst und fertiggereift.

Die Bodenöffnung des Zylinders sowie die Einfüllöffnung (3) werden durch den untersten Formeinsatz bzw. oben durch einen Abschluss - Doppel-Federpressdeckel (9) verschlossen, wobei der unterste Formeinsatz auf einer nach innengerichteten Auflagenbördelung (2) am Zylinder aufliegt und der Doppel-Federpressdeckel oben nach dem Pressvorgang mittels Befestigungsmittels, eines Bolzens, der durch zwei sich gegenüberliegenden Bohrungen an der Einfüllöffnung des Zylinders arretiert wird, wodurch die eingesetzten Lagen festgehalten und unter Druck gehalten werden.

Paul Kölmel, 7556 Ötigheim

Schinkenpresse

Die Erfindung betrifft eine Schinkenpresse zum Formen
und Pressen von Kochschinken, Rohschinken, Schinkenstücken und sonstigen gepökelten Fleischstücken in
runde oder kantige Formstücke.

Formen zum Dämpfen (Kochen), Preßformen, sind seit langem
bekannt.
Es sind Einzelformen, bestehend aus Bodenteil, rund oder
kantig,und Oberteil(Preßdeckel) .

Jeder Schinken benötigte bisher eine eigene Form.

Insbesondere der Kochschinken muß in einer Preßform gedämpft werden und muß darin auskühlen, damit er die gewünschte Rundform oder Kantform erhält.
Neuerdings sind auch größere Schinkenpressen für Rohschinken auf dem Markt. Zur Reifung und Erzielung von
kuranten Stücken ist das Pressen vorteilhaft.
Neben dem Vorteil der schnelleren Produktionszeit durch
Druckreifung ist das Zustandebringen einer ansprechenden
und abfalvermindernden Form sehr wichtig.
Dies war bisher mit dem herkömmlichen Salzen und Lagern
in Schichten nur bedingt zu erreichen.
Kochschinken werden wie eh und je manuel in die einzelnen Formen bzw.Pressen gedrückt und mit dem Preßdeckel unter
Druck gebracht.


Der Erfindung liegt die Aufgabe zugrunde, eine Schinkenpresse zu schaffen, die in der Größe so gehalten ist,
daß das Pressen mit Hilfe des Kolbendrucks (hydr.) geschehen kann und darüberhinaus auch noch mehrere Schinken,
ob Koch- oder Rohschinken, Schinkenstücke und sonstige

gepökelte Fleischstücke in einer Schinkenpresse gepreßt,
d.h. unter Druck gebracht und gehalten werden können.

- 2 -

Ferner sollen in dieser Schinkenpresse sowohl runde
als auch kantige Formen erzielt werden können.
Diese Schinkenpresse wird mit der Ware gefüllt und
zum Pressen mit dem Kolbendruck gegen den Deckel gedrückt.
Ein entsprechenden Preßdeckel hält die Schinkenpresse
fest verschlossen.

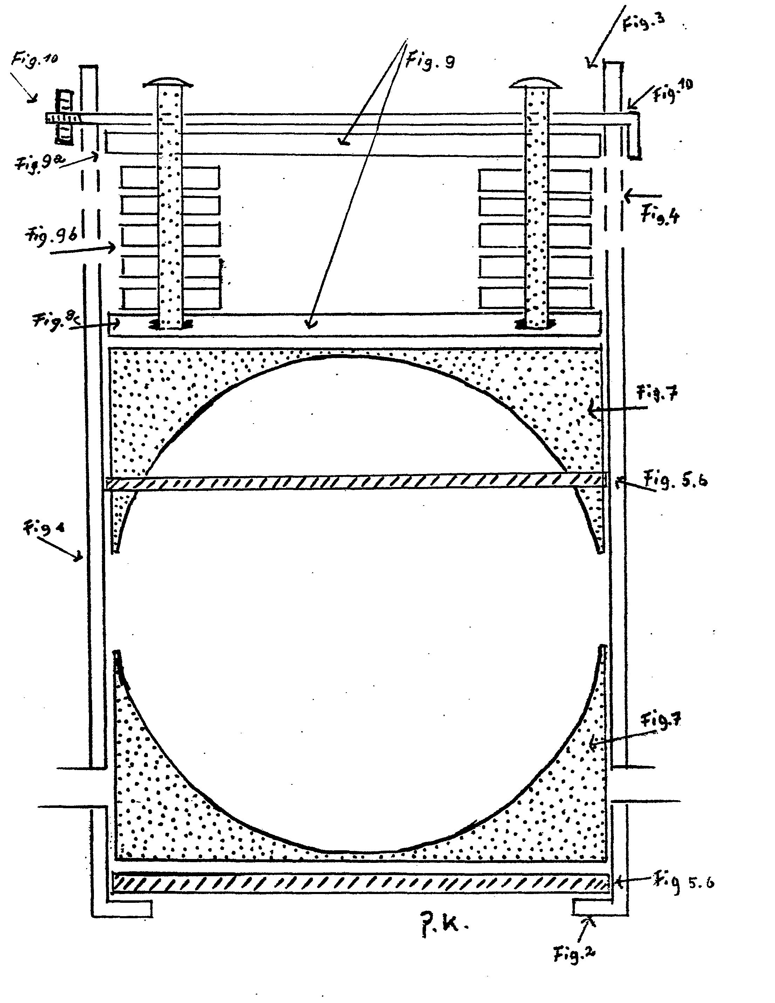

Diese Aufgabe wird bei einer eingangs dargelegten
Schinkenpresse erfindungsgemäß dadurch gelöst, daß
diese aus einem rechteckigen Zylinder aus geeignetem
Material besteht (Fig.1), einem Boden(Fig.5), mehreren
runden oder flachen Einsätzen (Fig.5,6,7 ) und einem
Preßdeckel (Fig.9) besteht.

Vorteile dieser Schinkenpresse:

1. Verwendbar für Koch-und Rohschinken.
2. Verwendbar für runde und kantige Schinken.
3. Verarbeitung von für die bisherige Schinkenherstellung
   weniger geeigneten Stücken.
4. Einfache Reinigung, einfach zerlegbar, einfache Konstruktion.
5. Raumsparend, weil stapelbar.
6. Verwendbar für Preßwürste.
7. Spürbare Produktionshilfe für kleine und mittlere
   Betriebe mit dem üblichen Schinkenwarensortiment.
8. Relativ geringer Kapitalaufwand für die Anschaffung
   und geringerer Verlust durch weniger Anschnittabfälle.

**A n s p r ü c h e**

0019810

1. Zylinderformkasten (Fig.1) zur Aufnahme von gepökelten
   Fleischstücken zum Pressen und Kochen für die Schinkenproduktion und dergleichen, dadurch gekennzeichnet,
   daß der aus rostfreiem Stahl oder Alublech bestehende
   Zylinder an beiden Enden eine Öffnung hat, wobei eine
   Öffnung an allen vier Seiten eine etwa 6 – 10 mm große
   Bördelung nach innen(Fig.2)als Auflage eines Abschlußbleches hat und an der anderen glatten Öffnung(Fig. 3)
   an 2 gegenüberliegenden Seiten eine oder mehrere untereinander angebrachten Bohrungen (Fig.4) sind, zur Aufnahme(durchstecken) eines Haltebolzens zur Fixierung
   des Deckels.

2. Zylinderformkasten nach Anspruch 1 dadurch gekennzeichnet, daß zum Formen und Pressen der Fleischstücke in
   Vierkant- und Rundschinken sowohl flache Platten als
   auch Rundformeinsätze (Fig.567) in den Zylinder eingesetzt werden, wobei die flache Platte den Boden des
   Zylinders verschließt(ebenso die Rundformeinsätze(Fig.7)
   und auch in derselben Art der Zylinder oben verschlossen
   wird, wobei oben zur Druckregulierung ein Feder-Doppelpreßdeckel zum Einsatz kommt.(Fig.9).

3. Zylinderformkasten nach Anspruch 1, dadurch gekennzeichnet, daß auf die obere Platte (eigentliche Abschlußplatte) oder Rundformeinsatz ein Feder-XXXX Doppelpreßdeckel eingesetzt wird, um das beim Kochen sich verringernde Volumen des Fleischgutes dennoch unter Druck
   zu halten, dadurch gekennzeichnet, daß der Feder-Doppelpreßdeckel aus Kunststoff oder Metall (Fig.9) aus einem
   oberen Teil (Fig.9a) einigen Federn (Fig.9b) und einem
   unteren Teil (Fig.9c) besteht.

4. Zylinderformkasten nach Anspruch 1, dadurch gekennzeichnet, daß der in Nr.2 erwähnte obere, zur Druckregulierung
   notwendige Feder-Doppelpreßdeckel mittels eines durch
   die erwähnten Bohrungen (obere Öffnung)des Zylinders
   gesteckten Bolzens nach dem Preßvorgang das Ganze
   fixiert(Fig.10).

0019810

Fig.10

Fig.3

Fig.9

Fig.10

Fig.9a

Fig.4

Fig.9b

Fig.9c

Fig.7

Fig.5.6

Fig.9

Fig.7

Fig.5.6

P.K.

Fig.2

Europäisches
Patentamt

**EUROPÄISCHER RECHERCHENBERICHT**

0019810

Nummer der Anmeldung
EP 80 10 2719
-2-

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | * Seite 2, Zeilen 73-123 * | | |
| | -- | | |
| A | GB - A - 1 439 144 (ABR. FOOD MACHINERY COMP.) | 1 | |
| | * Das ganze Dokument * | | |
| | ---- | | |
| | | | RECHERCHIERTE SACHGEBIETE (Int. Cl. 3) |

## Europäisches Patentamt

## EUROPÄISCHER RECHERCHENBERICHT

0019810

Nummer der Anmeldung

EP 80 10 2719

| Kategorie | EINSCHLÄGIGE DOKUMENTE Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| X | FR - A - 2 076 571 (LUTETIA-JAEGER) <br><br> * Das ganze Dokument * <br><br> -- | 1-4 | A 22 C 7/00 |
| | US - A - 1 935 015 (BUTZ) <br><br> * Seite 1, Zeile 53 bis Seite 2, Zeile 20 * <br><br> -- | 1,3,4 | |
| | GB - A - 292 735 (REDFEARN) <br><br> * Seite 2, Zeilen 72-101; Ansprüche 1-3 * <br><br> -- | 1,3,4 | RECHERCHIERTE SACHGEBIETE (Int. Cl. 3) <br><br> A 22 C |
| | US - A - 1 792 411 (BUTZ) <br><br> * Seite 1, Zeilen 78-87; Seite 2, Zeilen 41-60,72-85,102-110; Figur 4 * <br><br> -- | 1,3 | |
| | FR - A - 1 271 402 (FERRANDO) <br><br> * Seite 2, linke Spalte, Zeilen 10-22; Seite 2, rechte Spalte, Zeilen 1-12; Figuren 7,8,9 * <br><br> -- | 2 | |
| | DE - A - 2 006 709 (SCOT MEAT PRODUCTS) <br><br> * Seite 7, Zeile 10 bis Seite 8, Zeile 1; Figur 1 * <br><br> -- | 1 | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung |
| A | GB - A - 875 182 (HYGRADE FOOD PRODUCTS) <br><br> ./. | 1 | D: in der Anmeldung angeführtes Dokument <br> L: aus andern Gründen angeführtes Dokument <br> &: Mitglied der gleichen Patent-familie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 16-07-1980 | DE LAMEILLEURE |

EPA form 1503.1 06.78